# EUROPÄISCHE PATENTSCHRIFT

(11) **EP 4 111 084 B1**
(45) Veröffentlichungstag und Bekanntmachung des Hinweises auf die Patenterteilung: **31.07.2024**
(21) Anmeldenummer: 21705175.4
(22) Anmeldetag: 12.02.2021
(51) Int. Cl.: F16L 37/14, E03C 1/02, F16L 33/22, F16L 33/28

(54) **VORRICHTUNG ZUR VERBINDUNG EINES FLÜSSIGKEITSSCHLAUCHS AN EINEM VENTIL**
DEVICE FOR CONNECTING A LIQUID HOSE TO A VALVE
DISPOSITIF DE RACCORDEMENT D'UN TUYAU À LIQUIDE À UNE VANNE

(30) Priorität: 24.02.2020 DE 102020104733
(43) Veröffentlichungstag der Anmeldung: 04.01.2023
(73) Patentinhaber: Grohe AG, 58675 Hemer (DE)
(72) Erfinder: MAINKA, David, 58640 Iserlohn (DE); SCHLÜTER, Matthias, 44289 Dortmund NRW (DE)
(86) Internationale Anmeldenummer: PCT/EP2021/053457
(87) Internationale Veröffentlichungsnummer: WO 2021/170423

(56) Entgegenhaltungen:
- EP-A1- 3 199 856
- EP-A2- 0 745 800
- DE-A1- 3 729 570
- DE-A1- 3 733 027

## Beschreibung

Die vorliegende Erfindung betrifft eine Vorrichtung zur Verbindung eines Flüssigkeitsschlauchs an einem Ventil, einen Flüssigkeitsschlauch mit einer entsprechenden Vorrichtung sowie ein Ventil mit einer entsprechenden Vorrichtung. Der Flüssigkeitsschlauch und das Ventil dienen insbesondere der Zuführung einer Flüssigkeit zu einer Sanitärarmatur, die der bedarfsgerechten Bereitstellung der Flüssigkeit insbesondere an einem Spülbecken, Waschbecken, Dusche oder Badewanne dient.

Es sind Verbindungsvorrichtungen für Kraftfahrzeuge und in Hydraulikfluid-Steuereinrichtungen bekannt, beispielsweise aus DE 37 29 570 A1 und DE 37 33 027 A1.

Die Versorgung von Sanitärarmaturen mit der Flüssigkeit, insbesondere Wasser, kann über zumindest einen Flüssigkeitsschlauch erfolgen, der an das Ventil angeschlossen werden muss. Hierzu weisen die Flüssigkeitsschläuche an zumindest einem ihrer längsseitigen Enden eine Überwurfmutter oder zylindrische Nippel mit einer Quetschverschraubung auf. Diese Überwurfmuttern und Quetschverschraubungen stören unter anderem beim Durchstecken der Flüssigkeitsschläuche durch eine Montageöffnung eines Trägers der Sanitärarmaturen, bei dem es sich beispielsweise um eine Küchenarbeitsplatte oder ein Spülbecken handeln kann. Weiterhin können die Flüssigkeitsschläuche beim Verschrauben der Überwurfmuttern und Quetschverschraubungen stören oder sich mitdrehen und dadurch beschädigt werden.

Aufgabe der Erfindung ist es daher, die mit Bezug auf den Stand der Technik geschilderten Probleme zumindest teilweise zu lösen und insbesondere eine Vorrichtung anzugeben, durch die ein Verbinden eines Flüssigkeitsschlauchs an einem Ventil erleichtert wird. Zudem soll auch ein Flüssigkeitsschlauch mit einer entsprechenden Vorrichtung angegeben werden, durch die ein Verbinden des Flüssigkeitsschlauchs an einem Ventil erleichtert wird. Darüber hinaus soll auch ein Ventil mit einer entsprechenden Vorrichtung angegeben werden, durch die ein Verbinden eines Flüssigkeitsschlauchs mit dem Ventil erleichtert wird.

Diese Aufgaben werden gelöst mit einer Vorrichtung, einem Flüssigkeitsschlauch und einem Ventil gemäß den Merkmalen der unabhängigen Patentansprüche. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvollerweise miteinander kombiniert werden können und weitere Ausgestaltung der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Vorrichtung zur Verbindung eines Flüssigkeitsschlauchs an einem Ventil bei, das zumindest Folgendes aufweist:
a) ein erstes Gewinde, mit dem die Vorrichtung an dem Ventil befestigbar ist;
b) eine Aufnahmeöffnung, in die der Flüssigkeitsschlauch einsteckbar ist;
c) eine Befestigungseinrichtung (6), mit der der Flüssigkeitsschlauch (2) in der Aufnahmeöffnung (5) befestigbar ist, wobei die Befestigungseinrichtung (6) zumindest eine Ausnehmung (7) umfasst, in die ein Befestigungselement (8) für den Flüssigkeitsschlauch (2) einsteckbar ist;
d) eine Sicherungshülse (26), die dazu eingerichtet ist, ein Entfernen des Befestigungselements (8) aus der Ausnehmung (7) zu verhindern.

Der Flüssigkeitsschlauch dient insbesondere der Zuführung einer Flüssigkeit, insbesondere Wasser, zu einer Sanitärarmatur. Derartige Sanitärarmaturen dienen insbesondere der bedarfsgerechten Bereitstellung der Flüssigkeit an einem Spülbecken, Waschbecken, Dusche und/oder Badewanne. Hierzu kann die Sanitärarmatur ein Armaturengehäuse aufweisen. Das Armaturengehäuse kann zumindest teilweise aus Kunststoff und/oder Metall, wie zum Beispiel Messing oder eine Zinklegierung, bestehen. Weiterhin ist das Armaturengehäuse insbesondere an einem Träger, wie zum Beispiel einer (Küchen-)Arbeitsplatte, befestigbar. Das Ventil kann insbesondere nach Art eines Eckventils ausgebildet und/oder mit einer Flüssigkeitsleitung verbindbar sein. Mittels der Flüssigkeitsleitung ist dem Eckventil die Flüssigkeit von einer Flüssigkeitsquelle, wie zum Beispiel einem öffentlichen Wasserversorgungsnetz oder einem Warmwasserbereiter, zuführbar. Weiterhin kann das Ventil zumindest teilweise in einer Wand befestigbar sein und/oder einen Betätigungsgriff zur Betätigung des Ventils aufweisen.

Die Vorrichtung kann insbesondere zumindest teilweise aus Metall bestehen. Weiterhin weist die Vorrichtung ein erstes Gewinde auf, mit dem die Vorrichtung an dem Ventil befestigbar ist. Das erste Gewinde ist insbesondere an einem ersten längsseitigen Ende der Vorrichtung ausgebildet. Bei dem ersten Gewinde handelt es sich insbesondere um ein Innengewinde. Weiterhin kann das erste Gewinde eine Nenngröße von insbesondere 0,25 bis 1 Zoll, bevorzugt 3/8 Zoll aufweisen.

Zudem weist die Vorrichtung eine Aufnahmeöffnung auf, in die der Flüssigkeitsschlauch einsteckbar ist. Unter "einsteckbar" ist insbesondere zu verstehen, dass der Flüssigkeitsschlauch ohne Drehbewegung in die Aufnahmeöffnung einführbar und/oder nicht in die Aufnahmeöffnung geschraubt werden muss. Die Aufnahmeöffnung weist zudem insbesondere kein Gewinde auf. Weiterhin ist die Aufnahmeöffnung insbesondere an einem zweiten längsseitigen Ende der Vorrichtung angeordnet. Zudem kann die Aufnahmeöffnung insbesondere nach Art einer Bohrung und/oder koaxial zu einer Längsachse der Vorrichtung ausgebildet sein. Darüber hinaus kann die Aufnahmeöffnung beispielsweise einen Durchmesser von 5 mm (Millimeter) bis 20 mm aufweisen. Der Flüssigkeitsschlauch ist insbesondere flüssigkeitsdicht in die Aufnahmeöffnung einsteckbar, sodass keine Flüssigkeit aus der Vorrichtung bzw. der Aufnahmeöffnung in eine Umgebung austreten kann. Hierzu kann der Flüssigkeitsschlauch eine Dichtung, beispielsweise nach Art eines O-Rings, aufweisen.

Die Vorrichtung weist ferner eine Befestigungseinrichtung auf, mit der der Flüssigkeitsschlauch in der Aufnahmeöffnung befestigbar ist. Die Befestigungseinrichtung kann beispielsweise nach Art einer Rasteinrichtung, Schnappkupplung oder einer sogenannten John Guest-Kupplung ausgebildet sein. Weiterhin kann der Flüssigkeitsschlauch in der Aufnahmeöffnung durch die Befestigungseinrichtung insbesondere durch Formschluss befestigbar sein. Zudem kann der Flüssigkeitsschlauch in der Aufnahmeöffnung durch die Befestigungseinrichtung lösbar befestigbar sein. Durch die Befestigungseinrichtung wird ermöglicht, dass der Flüssigkeitsschlauch erst nachdem die Vorrichtung mit dem Ventil verschraubt wurde, an der Vorrichtung befestigt werden kann. Hierdurch wird vermieden, dass der Flüssigkeitsschlauch beim Festschrauben der Vorrichtung an dem Ventil stört oder beschädigt wird. Zudem muss der Flüssigkeitsschlauch keine Überwurfmutter oder eine Quetschverschraubungen an zumindest einem seiner beiden längsseitigen Enden aufweisen, sodass der Flüssigkeitsschlauch zumindest an einem seiner beiden längsseitigen Enden keinen größeren Durchmesser aufweist als zwischen seinen beiden längsseitigen Enden. Der Flüssigkeitsschlauch ist dadurch leichter durch eine Montageöffnung in dem Träger der Sanitärarmatur führbar. Zudem muss der Flüssigkeitsschlauch nicht für unterschiedliche Varianten von Ventilen angepasst sein. Stattdessen kann die Vorrichtung als Adapter für den Flüssigkeitsschlauch dienen.

Der Flüssigkeitsschlauch kann durch die Befestigungseinrichtung formschlüssig in der Aufnahmeöffnung befestigt sein.

Die Befestigungseinrichtung kann zumindest eine Ausnehmung umfassen, in die ein Befestigungselement für den Flüssigkeitsschlauch einsteckbar ist. Die zumindest eine Ausnehmung kann sich insbesondere von einer Mantelfläche der Vorrichtung bis in die Aufnahmeöffnung erstrecken. Zudem kann die zumindest eine Ausnehmung nach Art eines Schlitzes ausgebildet sein. Weiterhin kann die Vorrichtung zwei Ausnehmungen aufweisen, die sich in Bezug auf eine Längsachse der Vorrichtung oder der Aufnahmeöffnung gegenüberliegen. Sind die Ausnehmungen nach Art von Schlitzen ausgebildet, können diese parallel zueinander verlaufen. Bei dem Befestigungselement kann es sich insbesondere um ein separates Bauteil oder ein beweglich an der Vorrichtung befestigtes Bauteil handeln. Nach dem Einstecken des Flüssigkeitsschlauchs in die Aufnahmeöffnung und nach dem Einstecken des Befestigungselements in die zumindest eine Ausnehmung kann das Befestigungselement den Flüssigkeitsschlauch insbesondere formschlüssige in der Aufnahmeöffnung befestigen. Hierzu kann das Befestigungselement beispielsweise in eine Nut des Flüssigkeitsschlauchs oder eines Anschlussnippels des Flüssigkeitsschlauchs eingreifen.

Das Befestigungselement kann orthogonal zu einer Längsachse der Aufnahmeöffnung in die zumindest eine Ausnehmung einsteckbar sein.

Das Befestigungselement kann U-förmig ausgebildet sein. In diesem Fall kann das Befestigungselement einen ersten Befestigungsarm und einen zweiten Befestigungsarm aufweisen, die in die zumindest eine Ausnehmung eingreifen können.

Die Vorrichtung kann nach Art einer Schraubenmutter ausgebildet sein. Dies kann insbesondere bedeuten, dass die Vorrichtung auf das Ventil aufschraubbar ist.

Die Vorrichtung kann eine Mantelfläche mit zumindest zwei parallel verlaufenden Schlüsselflächen zur Übertragung eines Drehmoments auf die Vorrichtung aufweisen. Bei der Mantelfläche handelt es sich insbesondere um eine Außenfläche der Vorrichtung, die sich insbesondere um die Längsachse erstreckt. Die Vorrichtung weist insbesondere sechs Schlüsselflächen auf. Die einzelnen Schlüsselflächen sind insbesondere (im Wesentlichen) plan ausgebildet. Die zumindest zwei Schlüsselflächen dienen als Kraftangriffsflächen für einen Schraubenschlüssel, mittels dem die Vorrichtung an dem Ventil festschraubbar ist.

Die Vorrichtung kann einen Flüssigkeitskanal aufweisen, der in die Aufnahmeöffnung mündet. Der Flüssigkeitskanal kann sich insbesondere von dem ersten längsseitigen Ende der Vorrichtung bis zu der Aufnahmeöffnung erstrecken, sodass die Flüssigkeit von dem ersten längsseitigen Ende der Vorrichtung dem Flüssigkeitsschlauch zuführbar ist.

Einem weiteren Aspekt der Erfindung folgend wird auch ein Flüssigkeitsschlauch für eine Sanitärarmatur vorgeschlagen, wobei der Flüssigkeitsschlauch in eine Aufnahmeöffnung einer erfindungsgemäßen Vorrichtung eingesteckt und in der Aufnahmeöffnung durch eine Befestigungseinrichtung der Vorrichtung befestigt ist. Für weitere Einzelheiten auf die Beschreibung der erfindungsgemäßen Vorrichtung verwiesen.

Einem noch weiteren Aspekt der Erfindung folgend wird auch ein Ventil zur Zuführung einer Flüssigkeit zu einer Sanitärarmatur vorgeschlagen, das ein zweites Gewinde aufweist, über das eine erfindungsgemäße Vorrichtung an dem Ventil befestigt ist. Das zweite Gewinde ist insbesondere an einem Flüssigkeitsauslass des Ventils ausgebildet. Weiterhin kann es sich bei dem zweiten Gewinde insbesondere um ein Außengewinde handeln. Das zweite Gewinde kann eine Nenngröße von insbesondere 0,25 bis 1 Zoll, bevorzugt 3/8 Zoll aufweisen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: ein Ventil in einer Seitenansicht;
- Fig. 2:: eine Vorrichtung zur Verbindung eines Flüssigkeitsschlauchs an dem Ventil in einer Seitenansicht;
- Fig. 3:: die Vorrichtung mit verbundenem Flüssigkeitsschlauch in der Seitenansicht;
- Fig. 4:: die Vorrichtung in einer Frontansicht;
- Fig. 5:: die Vorrichtung in einer Seitenansicht gemäß einer weiteren Ausführungsform; und
- Fig. 6:: die in der Fig. 5 gezeigte Vorrichtung in einer geschnittenen Seitenansicht.

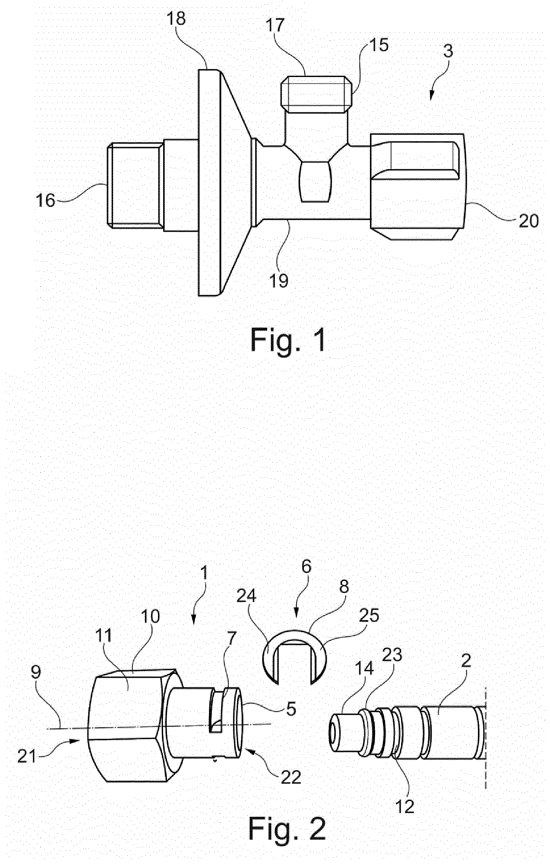

Die Fig. 1 zeigt ein Ventil 3 in einer Seitenansicht, das hier nach Art eines Eckventils ausgebildet ist. Das Ventil 3 umfasst einen Ventilkörper 19 mit einem Flüssigkeitseinlass 16 und einem Flüssigkeitsauslass 17. Der Flüssigkeitseinlass 16 des Ventilkörpers 19 ist in einem montierten Zustand des Ventils 3 mit einem hier nicht gezeigten Zuführrohr für eine Flüssigkeit verbunden und in einer hier ebenfalls nicht gezeigten Wand angeordnet. Eine hierzu erforderliche Öffnung in der Wand ist durch eine Blende 18 des Ventils verdeckbar, die hier nach Art einer Rosette ausgebildet ist. Die Blende 18 liegt im montierten Zustand des Ventils 3 auf einer Außenfläche der Wand auf. Die Flüssigkeit ist von dem Flüssigkeitseinlass 16 durch den Ventilkörper 19 zu dem Flüssigkeitsauslass 17 leitbar. Weiterhin weist das Ventil 3 einen Betätigungsgriff 20 auf, durch den das Ventil 3 durch einen Benutzer des Ventils 3 betätigbar, d. h. öffenbar und/oder schließbar, ist.

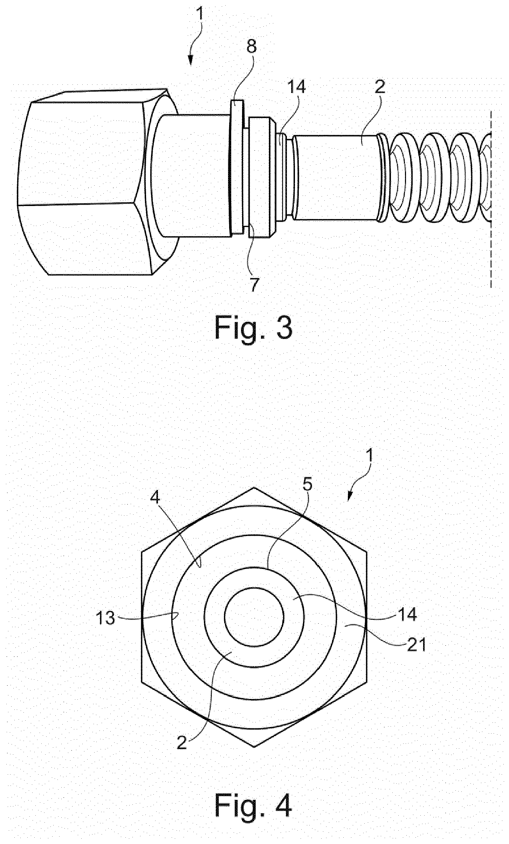

Die Fig. 2 zeigt in einer Seitenansicht eine Vorrichtung 1 zur Verbindung eines Flüssigkeitsschlauchs 2 an dem in der Fig. 1 gezeigten Ventil 3. Die Vorrichtung 1 weist einen in der Fig. 4 gezeigten Flüssigkeitskanal 13 auf, der sich entlang einer Längsachse 9 der Vorrichtung 1 erstreckt. Der Flüssigkeitskanal 13 erstreckt sich vollständig durch die Vorrichtung 1, sodass die Vorrichtung 1 rohrförmig ausgebildet ist. In dem Flüssigkeitskanal 13 ist an einem ersten längsseitigen Ende 21 der Vorrichtung 1 ein ebenfalls in der Fig. 4 gezeigtes erstes Gewinde 4 ausgebildet, bei dem es sich hier um ein Innengewinde handelt. Die Vorrichtung 1 ist über das erste Gewinde 4 mit einem in der Fig. 1 gezeigten zweiten Gewinde 15 des Flüssigkeitsauslasses 17 des Ventils 3 verschraubbar. Hierzu weist die Vorrichtung 1 an einer äußeren Mantelfläche 10 sechs (im Wesentlichen) plane Schlüsselflächen 11 auf, die um die Längsachse 9 verteilt ausgebildet sind und von denen sich jeweils zwei Schlüsselflächen 11 gegenüberliegen und parallel zueinander verlaufen. Die Schlüsselflächen 11 dienen als Kraftangriffsflächen für einen hier nicht gezeigten Schraubenschlüssel, sodass durch den Schraubenschlüssel zum Festschrauben der Vorrichtung 1 an dem in der Fig. 1 gezeigten Ventil 3 ein Drehmoment auf die Vorrichtung 1 übertragbar ist. Die Vorrichtung 1 ist hier somit nach Art einer Schraubenmutter ausgebildet.

An einem zweiten längsseitigen Ende 22 der Vorrichtung 1 ist eine parallel zu der Längsachse 9 verlaufende Aufnahmeöffnung 5 ausgebildet, in die ein Schlauchnippel 14 des Flüssigkeitsschlauchs 2 einsteckbar ist. Der Schlauchnippel 14 ist hier einteilig mit dem Flüssigkeitsschlauch 2 ausgebildet und weist eine Dichtung 23 in Form eines O-Ring auf. Weiterhin weist die Vorrichtung 1 eine Befestigungseinrichtung 6 auf, mit der der Flüssigkeitsschlauch 2 in der Aufnahmeöffnung 5 befestigbar ist. Die Befestigungseinrichtung 6 umfasst zwei Ausnehmungen 7, von denen in der Fig. 2 nur eine zu erkennen ist. Die beiden Ausnehmungen 7 sind nach Art von Schlitzen ausgebildet, die parallel zueinander verlaufen und sich von der Mantelfläche 10 der Vorrichtung 1 bis in die Aufnahmeöffnung 5 für den Flüssigkeitsschlauch 2 erstrecken. Nach dem Einstecken des Schlauchnippels 14 des Flüssigkeitsschlauchs 2 in die Aufnahmeöffnung 5 ist ein U-förmiges Befestigungselement 8 der Befestigungseinrichtung 6 orthogonal zu der Längsachse 9 in die Ausnehmungen 7 einsteckbar. Hierzu weist das Befestigungselement 8 einen ersten Befestigungsarm 24 und einen zweiten Befestigungsarm 25 auf, die in die Ausnehmungen 7 einführbar sind. Die Befestigungsarme 24, 25 greifen in eine umlaufende Nut 12 des Schlauchnippels 14 des Flüssigkeitsschlauchs 2 ein, sodass der Flüssigkeitsschlauch 2 formschlüssig in der Aufnahmeöffnung 5 befestigt ist.

Die Fig. 3 zeigt die Vorrichtung 1 in der Seitenansicht, nachdem der Flüssigkeitsschlauch 2 mit seinem Schlauchnippel 14 in die in der Fig. 2 gezeigte Aufnahmeöffnung 5 und das Befestigungselement 8 in die Ausnehmungen 7 gesteckt wurden. Der Flüssigkeitsschlauch 2 ist daher in der Aufnahmeöffnung 5 befestigt. Gemäß Ausführungsformen kann vorgesehen sein, dass das Befestigungselement 8 im montierten Zustand nicht bündig eingesteckt ist. Dadurch kann ermöglicht werden, dass das Befestigungselement 8 z.B. mittels einer Zange zur Demontage des Flüssigkeitsschlauchs 2 einfacher wieder entfernt werden kann.

Die Fig. 4 zeigt die Vorrichtung 1 in einer Frontansicht aus Richtung des in der Fig. 2 gezeigten ersten längsseitigen Endes 21 der Vorrichtung 1. Zu erkennen sind hier der Nippel 14 des Flüssigkeitsschlauchs 2 in der Aufnahmeöffnung 5 und das in dem Flüssigkeitskanal 13 ausgebildete erste Gewinde 4, mittels dem die Vorrichtung 1 mit dem in der Fig. 1 gezeigten Ventil 3 verschraubbar ist.

Durch die vorliegende Erfindung ist ein Flüssigkeitsschlauch mit geringem Aufwand an einem Ventil befestigbar.

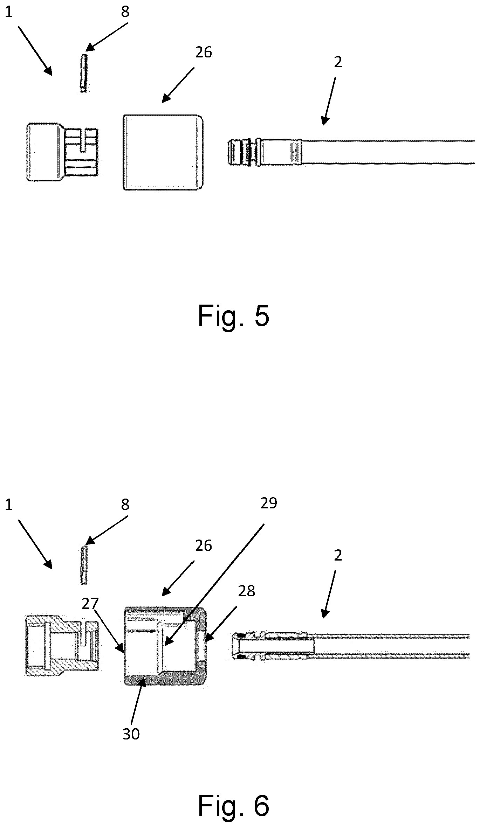

Die Figuren 5 und 6 zeigen eine weitere Ausführungsform der Vorrichtung 1. Die Ausführungsform basiert auf der in den Figuren 2 bis 4 gezeigten Vorrichtung und weist zusätzlich eine Sicherungshülse 26 auf. Die Sicherungshülse 26 ist dazu eingerichtet, das Befestigungselement 8 gegen ein Entfernen aus den Ausnehmungen 7 zu sichern. Die Sicherungshülse 26 kann nach Art eines Hohlzylinders gebildet sein. Die Befestigungshülse 26 kann eine erste axiale Öffnung 27 und eine zweite axiale Öffnung 28 sowie einen Innenraum 29, der über die erste axiale Öffnung 27 und die zweite axiale Öffnung 28 -zumindest im nicht-montierten Zustand- zur Außenseite offen ist, aufweisen. Eine innere Mantelfläche 30 kann den Innenraum 29 zumindest teilweise tangential umschließen. Zur Montage der Sicherungshülse 26 kann diese auf den Flüssigkeitsschlauch 2 aufgefädelt werden, indem der Schlauchnippel 14 über die zweite axiale Öffnung 28 in den Innenraum 29 der Sicherungshülse 26 eingeführt wird und dann über die erste axiale Öffnung 27 aus dem Innenraum 29 herausgeführt wird, so dass sich der Flüssigkeitsschlauch 2 durch die Sicherungshülse 26 hindurch erstreckt. Dann kann der Flüssigkeitsschlauch 2 wie oben mit Bezug auf die Figuren 2 bis 4 beschrieben an der Vorrichtung 1 befestigt werden mittels des Einsteckens des Befestigungselements 8 in die Ausnehmung(en) 7. Daraufhin kann die Sicherungshülse 26 über die erste axiale Öffnung 27 auf die Befestigungseinrichtung 6 der Vorrichtung 1 aufgeschoben werden, so dass die Sicherungshülse 26 die Befestigungseinrichtung 6 zumindest teilweise so umgibt, dass verhindert wird, dass das Befestigungselement 8 aus den Ausnehmungen 7 entfernt werden kann. Insbesondere kann im montierten Zustand ein Formschluss in Radialrichtung (radial bezogen z.B. auf eine im Wesentlichen axiale Erstreckung des Flüssigkeitsschlauchs 2) zwischen dem Befestigungselement 8 und der inneren Mantelfläche 30 ausgebildet sein, der ein Entfernen des Befestigungselements 8 verhindert. Zur Befestigung der Sicherungshülse 26 im montierten Zustand kann diese eine oder mehrere Quetschrippen aufweisen, die sich von der inneren Mantelfläche 30 aus in den Innenraum 29 hineinerstrecken und die beim Aufschieben der Sicherungshülse 26 auf die Befestigungseinrichtung 6 verformt werden und durch eine elastische Haltekraft die Sicherungshülse 26 an der Befestigungseinrichtung 6 befestigen. Alternativ oder zusätzlich kann die innere Mantelfläche auch so gestaltet sein, dass die Sicherungshülse 26 durch einen Formschluss und/oder eine Passung in axialer Richtung und/oder in tangentialer Richtung an der Sicherungshülse 26 befestigt ist.

### Bezugszeichenliste

- 1: Vorrichtung
- 2: Flüssigkeitsschlauch
- 3: Ventil
- 4: erstes Gewinde
- 5: Aufnahmeöffnung
- 6: Befestigungseinrichtung
- 7: Ausnehmung
- 8: Befestigungselement
- 9: Längsachse
- 10: Mantelfläche
- 11: Schlüsselfläche
- 12: Nut
- 13: Flüssigkeitskanal
- 14: Schlauchnippel
- 15: zweites Gewinde
- 16: Flüssigkeitseinlass
- 17: Flüssigkeitsauslass
- 18: Blende
- 19: Ventilkörper
- 20: Betätigungsgriff
- 21: erstes längsseitiges Ende
- 22: zweites längsseitiges Ende
- 23: Dichtung
- 24: erster Befestigungsarm
- 25: zweiter Befestigungsarm
- 26: Sicherungshülse
- 27: erste axiale Öffnung
- 28: zweite axiale Öffnung
- 29: Innenraum
- 30: Innere Mantelfläche

## Patentansprüche

1. Vorrichtung (1) zur Verbindung eines Flüssigkeitsschlauchs (2) an einem Ventil (3), wobei der Flüssigkeitsschlauch (2) und das Ventil (3) der Zuführung einer Flüssigkeit zu einer Sanitärarmatur dienen, zumindest aufweisend:
a) ein erstes Gewinde (4), mit dem die Vorrichtung (1) an dem Ventil (3) befestigbar ist;
b) eine Aufnahmeöffnung (5), in die der Flüssigkeitsschlauch (2) einsteckbar ist;
c) eine Befestigungseinrichtung (6), mit der der Flüssigkeitsschlauch (2) in der Aufnahmeöffnung (5) befestigbar ist, wobei die Befestigungseinrichtung (6) zumindest eine Ausnehmung (7) umfasst, in die ein Befestigungselement (8) für den Flüssigkeitsschlauch (2) einsteckbar ist;
d) eine Sicherungshülse (26), die dazu eingerichtet ist, ein Entfernen des Befestigungselements (8) aus der Ausnehmung (7) zu verhindern.

2. Vorrichtung (1) nach Patentanspruch 1, wobei der Flüssigkeitsschlauch (2) durch die Befestigungseinrichtung (6) formschlüssig in der Aufnahmeöffnung (5) befestigbar ist.

3. Vorrichtung (1) nach einem der vorhergehenden Patentansprüche, wobei das Befestigungselement (8) orthogonal zu einer Längsachse (9) der Aufnahmeöffnung (5) in die zumindest eine Ausnehmung (7) einsteckbar ist.

4. Vorrichtung (1) nach einem der vorhergehenden Patentansprüche, wobei das Befestigungselement (8) U-förmig ausgebildet ist.

5. Vorrichtung (1) nach einem der vorhergehenden Patentansprüche, wobei die Vorrichtung (1) nach Art einer Schraubenmutter ausgebildet ist.

6. Vorrichtung (1) nach einem der vorhergehenden Patentansprüche, aufweisend eine Mantelfläche (10) mit zumindest zwei parallel verlaufenden Schlüsselflächen (11) zur Übertragung eines Drehmoments auf die Vorrichtung (1).

7. Vorrichtung (1) nach einem der vorhergehenden Patentansprüche, aufweisend einen Flüssigkeitskanal (13), der in die Aufnahmeöffnung (5) mündet.

8. Vorrichtung (1) gemäß einem der vorhergehenden Patentansprüche, wobei die Sicherungshülse (26) eine Hohlzylinderform aufweist.

9. Flüssigkeitsschlauch (2) für eine Sanitärarmatur, umfassend eine Vorrichtung (1) nach einem der vorhergehenden Patentansprüche, wobei der Flüssigkeitsschlauch (2) in die Aufnahmeöffnung (5) der Vorrichtung (1) eingesteckt und in der Aufnahmeöffnung (5) durch eine Befestigungseinrichtung (6) der Vorrichtung (1) befestigt ist.

10. Ventil (3) zur Zuführung einer Flüssigkeit zu einer Sanitärarmatur, umfassend eine Vorrichtung (1) nach einem der Patentansprüche 1 bis 8, wobei das Ventil (3) ein zweites Gewinde (15) aufweist, über das die Vorrichtung (1) an dem Ventil (3) befestigt ist.

## Claims

1. A device (1) for connecting a liquid hose (2) to a valve (3), wherein the liquid hose (2) and the valve (3) serve to supply a liquid to a sanitary fitting, at least having
a) a first thread (4), with which the device (1) can be fastened to the valve (3);
b) a receiving opening (5) into which the liquid hose (2) can be inserted;
c) a fastening device (6) with which the liquid hose (2) can be fastened in the receiving opening (5), wherein the fastening device (6) comprises at least one recess (7) into which a fastening element (8) for the liquid hose (2) can be inserted;
d) a securing sleeve (26) which is configured to prevent the fastening element (8) from being removed from the recess (7).

2. The device (1) according to claim 1, wherein the liquid hose (2) can be positively fastened in the receiving opening (5) by means of the fastening device (6).

3. The device (1) according to any one of the preceding claims, wherein the fastening element (8) can be inserted into the at least one recess (7) orthogonally to a longitudinal axis (9) of the receiving opening (5) .

4. The device (1) according to any one of the preceding claims, wherein the fastening element (8) is formed to be U-shaped.

5. The device (1) according to any one of the preceding claims, wherein the device (1) is formed in the manner of a screw nut.

6. The device (1) according to any one of the preceding claims, having a lateral surface (10) with at least two parallel wrench flats (11) for transmitting a torque to the device (1).

7. The device (1) according to any one of the preceding patent claims, having a liquid channel (13) which opens into the receiving opening (5).

8. The device (1) according to any one of the preceding claims, wherein the securing sleeve (26) has a hollow cylinder shape.

9. A liquid hose (2) for a sanitary fitting, comprising a device (1) according to any one of the preceding claims, wherein the liquid hose (2) is inserted into the receiving opening (5) of the device (1) and is fastened in the receiving opening (5) by means of a fastening device (6) of the device (1).

10. A valve (3) for supplying a liquid to a sanitary fitting, comprising a device (1) according to any one of claims 1 to 8, wherein the valve (3) has a second thread (15) via which the device (1) is fastened to the valve (3).

## Revendications

1. Dispositif (1), destiné à raccorder un flexible à liquide (2) sur une vanne (3), le flexible à liquide (2) et la vanne (3) servant à alimenter un liquide vers une robinetterie sanitaire, comportant au moins:
a) un premier filetage (4), avec lequel le dispositif (1) peut se fixer sur la vanne (3) ;
b) un orifice de logement (5), dans lequel le flexible à liquide (2) est emboîtable ;
c) un système de fixation (6), avec lequel le flexible à liquide (2) peut se fixer dans l'orifice de logement (5), le système de fixation (6) comprenant au moins un évidement (7) dans lequel est emboîtable un élément de fixation (8) pour le flexible à liquide (2) ;
d) une douille de blocage (26), qui est configurée pour empêcher un retrait de l'élément de fixation (8) hors de l'évidement (7).

2. Dispositif (1) selon la revendication 1 du brevet, le flexible à liquide (2) pouvant être fixé par le système de fixation (6) par complémentarité de forme dans l'orifice de logement (5).

3. Dispositif (1) selon l'une quelconque des revendications précédentes du brevet, l'élément de fixation (8) étant emboîtable dans l'au moins un évidement (7) de manière orthogonale à un axe longitudinal (9) de l'orifice de logement (5).

4. Dispositif (1) selon l'une quelconque des revendications précédentes du brevet, l'élément de fixation (8) étant conçu en forme de U.

5. Dispositif (1) selon l'une quelconque des revendications précédentes du brevet, le dispositif (1) étant conçu à la manière d'un écrou.

6. Dispositif (1) selon l'une quelconque des revendications précédentes du brevet, comportant une surface d'enveloppe (10) pourvue d'au moins deux méplats (11) s'écoulant à la parallèle, pour la transmission d'un couple de rotation sur le dispositif (1) .

7. Dispositif (1) selon l'une quelconque des revendications précédentes du brevet, comportant une canalisation à liquide (13), qui débouche dans l'orifice de logement (5).

8. Dispositif (1) selon l'une quelconque des revendications précédentes du brevet, la douille de blocage (26) présentant la forme d'un cylindre creux.

9. Flexible à liquide (2), destiné à une robinetterie sanitaire, comprenant un dispositif (1) selon l'une quelconque des revendications précédentes du brevet, le flexible à liquide (2) étant emboîté dans l'orifice de logement (5) du dispositif (1) et étant fixé dans l'orifice de logement (5) par un système de fixation (6) du dispositif (1).

10. Vanne (3), destinée à alimenter un liquide vers une robinetterie sanitaire, comprenant un dispositif (1) selon l'une quelconque des revendications 1 à 8 du brevet, la vanne (3) comportant un deuxième filetage (15), par l'intermédiaire duquel le dispositif (1) est fixé sur la vanne (3).
